Europäisches Patentamt

European Patent Office

Office européen des brevets

(11) Veröffentlichungsnummer: **0 380 710**

**A1**

# EUROPÄISCHE PATENTANMELDUNG

(21) Anmeldenummer: 88121667.5

(51) Int. Cl.5: **G11B 5/84, G11B 5/712**

(22) Anmeldetag: 24.12.88

(43) Veröffentlichungstag der Anmeldung:
08.08.90 Patentblatt 90/32

(84) Benannte Vertragsstaaten:
DE FR GB

(71) Anmelder: **International Business Machines Corporation**
**Old Orchard Road**
**Armonk, N.Y. 10504(US)**

(72) Erfinder: **Windeln, Johannes, Dr.**
**Schuberstrasse 1**
**D-6501 Bodenheim(DE)**
Erfinder: **Morbitzer, Rainer**
**Taunusstrasse 34**
**D-6502 Mainz-Kostheim(DE)**
Erfinder: **Hilgers, Heinz, Dr.**
**Vogelsbergstrasse 5**
**D-6500 Mainz(DE)**

(74) Vertreter: **Kreidler, Eva-Maria, Dr. rer. nat.**
**IBM Deutschland GmbH Patentwesen und**
**Urheberrecht Schönaicher Strasse 220**
**D-7030 Böblingen(DE)**

(54) Verfahren zur Erhöhung des Schmiermittelaufnahmevermögens bei Magnetplatten.

(57) Die Erfindung betrifft ein Verfahren zur Erhöhung der Schmiermittelaufnahme durch eine Magnetschicht, bei dem eine Magnetschicht, welche Magnetteilchen, dispergiert in einem härtbaren organischen Bindemittelsystem und organischen Lösungsmitteln und einem Zusatz enthält, in einem zweistufigen Verfahren gehärtet wird, indem die Magnetschicht in einer ersten Stufe in einem Inertgas für eine bestimmte Zeit auf eine bestimmte Temperatur und in einer zweiten Stufe in einem Inertgas mit einem Zusatz an Sauerstoff für eine bestimmte Zeit auf eine bestimmte Temperatur erhitzt wird. In einer vorteilhaften Ausgestaltung der Erfindung wird eine Magnetschicht mit Polyvinylmethylether (PVME) als Zusatz in Stickstoff 2.5 Stunden lang auf 234 ° C und nach einer Abkühlung in einer Atmosphäre von Stickstoff mit einem Anteil von 30 Vol% Sauerstoff 60 Minuten lang auf 234 ° C erhitzt. Bei dieser Art der Härtung findet in der ersten Stufe eine Polymerisation des Bindemittels und eine Phasentrennung von PVME statt, und in der zweiten Stufe wird PVME oxidiert unter Ausbildung einer Vielzahl von Poren in der Magnetschicht.

## Verfahren zur Erhöhung des Schmiermittelaufnahmevermögens bei Magnetplatten

Die Erfindung betrifft ein Verfahren zur Erhöhung des Schmiermittelaufnahmevermögens von Überzügen von Magnetplatten, welche ein organisches Bindemittelsystem und magnetische Teilchen enthalten.

Ein magnetisches Aufzeichnungsmedium wie eine Magnetplatte besteht in der Regel aus einem Aluminiumsubstrat, auf das eine Magnetschicht aufgetragen ist, die ein duroplastisches oder thermoplastisches organisches Bindemittelsystem und magnetische Teilchen, wie Eisenoxidteilchen enthält. Die Beschichtungsmasse, welche das organische Bindemittelsystem und die Magnetteilchen, dispergiert in organischen Lösungsmitteln enthält, wird auf ein Plattensubstrat in einer vorgegebenen Schichtdicke aufgetragen und zu einem zähen beständigen Film ausgehärtet. Im Betrieb rotiert die Magnetplatte mit konstanter Rotationsgeschwindigkeit, und der Magnetkopf fliegt in einer bestimmten Höhe über der Plattenoberfläche. Während des Betriebs, insbesondere in der Start- und Endphase, kann es zu direkten Berührungen zwischen Kopf und Platte kommen, die zu einem Verschleiß und zu einer verkürzten Lebensdauer der Magnetplatte führen.

Bisher war es übliche Praxis, auf die Magnetplatte ein Schmiermittel aufzubringen, um eine Beschädigung der Platte bei einem Kontakt zwischen Kopf und Platte zu vermeiden. Es wurde auch vorgeschlagen, (IBM Technical Disclosure Bulletin, Vol. 26, No. 9, February 1984, p. 4455, M. R. Lorenz et al., " CONTROLLED PORE FORMATION IN MAGNETIC DISK COATINGS TO OPTIMIZE LUBRICANT RETENTION") zur Porenbildung in die Beschichtungsmasse Teilchen einzubringen, die in derselben unlöslich sind. So können beispielsweise Polyacetalteilchen in der Beschichtungsmasse gleichmäßig verteilt werden, die bei den zur Härtung angewendeten erhöhten Temperaturen wieder in Monomere zerfallen, welche verdampfen und in dem Überzug Mikroporen bilden. Durch eine Kontrolle der Konzentration und der Größe der Teilchen kann die Konzentration und Größe der Poren und damit das Aufnahmevermögen der Platte für ein flüssiges Schmiermittel kontrolliert werden.

Es wurde auch erkannt (U. S. Patent 4,546,035), daß das Aufnahmevermögen für Schmiermittel zwei getrennten Prozessen zugeschrieben werden muß, einmal dem Festhalten des Schmiermittels in Mikrorissen in der Nähe der Oberfläche der Magnetplatte und zum anderen dem Festhalten des Schmiermittels in Mikroporen, welche über eine bestimmte Dicke der Schicht verteilt sind. Es wurde festgestellt, daß das Festhalten des Schmiermittels, welches dem Oberflächenprozeß zuzuschreiben ist, als eine Funktion verschiedener Beschichtungszusammensetzungen ziemlich konstant ist, während das Festhalten des Schmiermittels, welches dem Mikroporenprozeß zuzuschreiben ist, von Beschichtungszusammensetzung zu Beschichtungszusammensetzung variiert.

Weiterhin wurde festgestellt, daß dieses unterschiedliche Festhalten des Schmiermittels als Funktion der Mikroporendichte zurückzuführen ist auf unterschiedliche Grade der Phasentrennung eines organischen Bestandteils der Beschichtungszusammensetzung und unterschiedliche Grade der Verflüchtigung durch einen oxidativen Abbau desselben während des Aushärtens. In der U. S. Patent schrift 4,456,035 sind eine Reihe polymerer Additive für magnetische Beschichtungszusammensetzungen angegeben, welche aufgrund ihrer Fähigkeit zur Phasentrennung und der ihnen innewohnenden niedrigeren thermischen Stabilität während des oxidativen Abbaus, verglichen mit der des Bindemittelsystems, zu einer zusätzlichen Mikroporenbildung in dem Prozeß führen, der den Mechanismen des thermischen und/oder oxidativen Abbaus und der Verflüchtigung zugeschrieben wird. Zusätzlich zu der erhöhten Mikroporenbildung bewirken diese Additive auch eine erhöhte Beständigkeit der magnetischen Überzüge. Diese Additive sollen während der Härtung abgebaut werden und, wenn es gewünscht wird, sich bis zu 100 % verflüchtigen. Polyvinylmethyläther, der ebenfalls während des Härtens abgebaut wird, sich aber nicht zu 100 % verflüchtigt, soll nicht in demselben Maße wie die in der U. S. Patentschrift genannten Additive zur Mikroporenbildung beitragen.

Bisher wurden die oxidativen Prozesse, die während der Härtung ablaufen, nie dahingehend untersucht, daß der Sauerstoffgehalt in der Atmosphäre, der die Magnetplatten während der Härtung ausgesetzt werden, variiert wurde. Versuche mit variierendem Sauerstoffgehalt sind aber von fundamentalem Interesse für alle Beschichtungszusammensetzungen für partikuläre Magnetplatten.

Aufgabe der Erfindung ist deshalb die Bereitstellung eines Verfahrens zum Härten von Magnetplatten, bei dem der Sauerstoffgehalt in der Ofenatmosphäre während der Härtung variiert wird.

Die Aufgabe der Erfindung wird gelöst durch ein Verfahren gemäß Patentanspruch 1.

Gemäß der Erfindung wird die magnetische Beschichtung der Magnetplatte, welche einen Zusatz enthält, in einer ersten Stufe in einem Inertgas und in einer zweiten Stufe in einer Inertgasatmosphäre mit variierenden Gehalten an Sauerstoff gehärtet. Durch diese Art der Härtung kann das Schmiermittelaufnahmevermögen der Magnetschicht drastisch erhöht werden.

Die Erfindung wird anhand der nachfolgenden speziellen Beschreibung näher erläutert.

Bei dem Herstellungsprozeß von Magnetplatten wird eine Dispersion magnetischer Teilchen in einem Bindemittelsystem und Lösungsmitteln und gegebenfalls verschiedenen Zusätzen (Beschichtungsmasse) auf ein Aluminiumsubstrat aufgetragen und durch Abschleudern gleichmässig auf dem Plattensubstrat verteilt. Als Bindemittel können beispielsweise Phenolnovolakharze, Epoxidharze, Polyurethanharze oder Polyesterharze eingesetzt werden. Geeignete Lösungsmittel sind beispielsweise Ethylamylketon, Isophoron, Xylol, Toluol oder Mischungen derselben. Besonders vorteilhaft ist die erfindungsgemäß verwendete Mischung aus 22 Vol% Ethylamylketon, 54 Vol% Isophoron, 22 Vol% Xylol und 2 Vol% Toluol. Die Porosität in dem ausgehärteten Überzug wird durch Zusätze wie Polyvinylmethylether (PVME) hervorgerufen. Es können aber auch die polymeren Additive, die in der o. g. U. S. Patentschrift beschrieben sind, zur Porenbildung verwendet werden.

Die beschichteten Plattensubstrate werden anschließend in einem Trocknungsofen auf eine bestimmte Temperatur erhitzt. Während dieses Aushärtungsprozesses erhält die Beschichtung ihre mechanische Belastungsfähigkeit, und gleichzeitig wird im Bereich der Oberfläche eine bestimmte Porosität eingestellt, die die spätere Aufnahme des Schmiermittels gewährleistet. Der Mechanismus der Porenbildung im Oberflächenbereich der Magnetplatte wird anhand der Wirkungsweise eines Zusatzes von Polyvinylmethylether (PVME) beschrieben. Das polymere PVME in der Beschichtungsmasse ist vor dem Erhitzen im Trocknungsofen mit den Harzausgangsstoffen und dem Lösungsmittel verträglich. Während des Aushärtens, beispielsweise bei 234 ° C, beginnen die Harzausgangsstoffe zu polymerisieren und bilden eine andere, für das PVME unverträgliche Umgebung. Dies führt zu einer Phasentrennung des PVMEs in der Harzmatrix. Ist Sauerstoff in der Ofenatmosphäre vorhanden, dann findet eine Konkurrenzreaktion statt. Das PVME wird bei den hohen Temperaturen zum Teil zerstört, d. h. abgebaut, und das phasengetrennte, abgebaute PVME hinterläßt Poren für die Aufnahme von Schmiermittel.

Bisher wurden die Aushärtprozesse mit Luft als Ofenatmosphäre durchgeführt. Bei diesen Prozessen konnte die Schmiermittelaufnahmefähigkeit der Beschichtungsmasse nur durch die Menge an zugesetztem PVME gesteuert werden. Einerseits ist ein erhöhter Zusatz an PVME erwünscht, um die Schmiermittelaufnahme zu erhöhen. Andererseits wirkt sich aber ein erhöhter Zusatz an PVME nachteilig auf die Eigenschaften der Magnetplattenbeschichtung aus, denn das PVME wirkt nicht nur als Porenbildner, sondern greift auch in die Härtungsreaktion der Beschichtungsmasse ein und bewirkt drastische Veränderungen der Erweichungstemperaturen der Magnetplattenbeschichtungen. Darüberhinaus beeinflußt es das Polierverhalten von Magnetplattenoberflächen in negativer Weise und verschlechtert die mechanische Beständigkeit der Magnetplattenbeschichtungen. Es ist deshalb ein Aushärtverfahren erwünscht, bei dem der PVME-Gehalt in der Magnet plattenbeschichtung nicht erhöht werden muß, gleichzeitig aber eine etwa doppelt so große Schmiermittelmenge wie bisher von der Magnetplattenbeschichtung aufgenommen werden kann. Das würde bedeuten, daß bei gleichbleibender Schmiermittelaufnahmefähigkeit der Gehalt an PVME um etwa 50 % abgesenkt werden könnte. Diese Verringerung des PVME-Gehalts ist sehr erwünscht, weil sie eine wesentliche Erhöhung der mechanischen Beständigkeit der Magnetschicht zur Folge hat.

Nachfolgend sind die Prozeßparameter für das zweistufige Härtungsverfahren angegeben. Unter Feststoffgehalt wird das Gewicht der gesamten Feststoffe in der Beschichtungsmasse, das in einer Thermogravimetrischen Analyse durch Abdampfen des Lösungsmittels bei einer Härtungstemperatur von 230 ° C ermittelt wird, verstanden. Bei dieser Bestimmung wird als Inertgas Stickstoff verwendet, so daß das PVME in der Harzmatrix erhalten bleibt. Unter Pigmentvolumenkonzentration wird der Volumenanteil des Pigments in der Beschichtungsmasse verstanden. Die Bestimmung desselben erfolgt, ebenfalls in einer Thermogravimetischen Analyse (TGA), bei Temperaturen > 600 ° C und unter Verwendung von Sauerstoff, um alle organischen Bestandteile zu verbrennen. Der verbleibende anorganische Pigmentanteil wird dann über die Dichte des Pigments in die Pigmentvolumenkonzentration umgerechnet.

| Zusammensetzung | Feststoffgehalt in % | Volumenkonzentration Pigment in % | Oxidativer Gewichtsverlust % |
|---|---|---|---|
| # 1 | 39.0 | 28.6 | 6.4 |
| # 2 | 39.6 | 29.2 | 6.4 |
| # 3 | 38.0 | 29.7 | 6.8 |

Alle Zusammensetzungen enthalten das Phenolnovolakharz R 108 der General Electric Co., welches eine Molekulargewichtsverteilung von etwa 300 bis 2000 und Gelzeiten von etwa 18 bis 19 Min. aufweist. Die Gelzeiten wurden mittels Dynamisch Mechanischer Analyse bestimmt.

Auch verwendet wurden Zusammensetzungen mit einem Gehalt an EPON 2004 Epoxidharz der Shell Chemical Co., welches ein Molekulargewicht von etwa 2000 aufweist.

Konstante Härtungsparameter, 1. Schritt

- Aufheizgeschwindigkeit = 20 ° C/Min.
- Endtemperatur = 234 ° C
- Aushärtzeit = 2.5 h
- Abkühlgeschwindigkeit = 2 ° C/Min.
- Sauerstoffgehalte = 0 %, 10 %, 30 %.

Der Sauerstoffgehalt wird in einem DRAEGER OXIWARN 100-Gerät bestimmt, welches auf einem elektrochemischen Sauerstoffmeßfühler (Kohlenstoffelektrode) basiert. Die Sauerstoffbestimmung wird vor dem Start eines jeden Laufs bei Zimmertemperatur vorgenommen. Während der Härtung wird Sauerstoff mit konstanter Geschwindigkeit zugeführt. Der Austausch des Gesamtgases in dem Trocknungsofen erfolgt innerhalb von zwei Minuten.

- Gasfluß      1.4 m/Sek. ( +/- 0.2)

Konstante Nachhärtungsparameter, 2. Schritt

- Endtemperatur = 234 ° C
- Aushärtzeit = 20 Min. und 60 Min.
- Sauerstoffgehalt = 0 %, 10 % und 30 %.

Die beschichteten Magnetplatten # 1 bis 3 werden zunächst 2.5 Stunden lang bei 234 ° C in einem Trocknungsofen mit Sauerstoffgehalten in der Ofenatmosphäre von 0, 10 und 30 %, Rest Stickstoff gehärtet. Anschließend werden die Magnetplatten, welche in einer Ofenatmosphäre ohne Sauerstoff d. h. nur in Stickstoff gehärtet wurden, 20 bzw. 60 Minuten lang bei Sauerstoffgehalten von 0, 10 und 30 %, Rest Stickstoff nachgehärtet. In gleicher Weise wird mit den Magnetplatten, welche 2.5 Stunden lang bei 234 ° C in einer Ofenatmosphäre mit 10 bzw. 30 % Sauerstoff gehärtet wurden, verfahren. Anschließend wurden alle Magnetplatten, trotz der unterschiedlichen Härten der Überzüge, unter den gleichen Bedingungen poliert. Die Polierzeit betrug 28 Sek., der angewendete Druck betrug 4.3 bar. Nach dem Polieren wurde auf die Magnetplatten ein Schmiermittel aufgetragen. Als solches kann beispielsweise ein Fluorkohlenwasserstoff- Schmiermittel, das in den U. S. Patentschriften 4,267,238 und 4,268,566 beschrieben ist, aufgetragen werden. Die Menge des aufgenommenen Schmiermittels ist definiert als die Menge, die von der Magnetplatte festgehalten wird und durch einen spezifischen Wischer, bei einem spezifischen Druck und einer gegebenen Zahl und Dauer von Wischvorgängen nicht entfernt werden kann.

In der nachfolgenden Tabelle sind die aufgenommenen Schmiermittelmengen für die Beschichtungszusammensetzung # 1, bezogen auf die Dicke der Magnetschicht, nach den verschiedenen Stufen der Härtung angegeben. Alle Schmiermittel-Gewichtsbestimmungen basieren auf einer Extraktion mit Fluorchlorkohlenwasserstoff (FREON, der Fa. du Pont de Nemours).

| O$_2$-Gehalt | Härtung 234 °C Dauer 2.5 h | Nachhärtung 234 °C 20 Min. | 60 Min. | O$_2$-Gehalt |
|---|---|---|---|---|
| | | 22.0 | 18.0 | 0 % |
| 0 % | 17.7 | 18.8 | 30.18 | 10 % |
| | | 21.5 | 36.26 | 30 % |
| | | 18.97 | 17.88 | 0 % |
| 10 % | 16.0 | 17.6 | 16.9 | 10 % |
| | | 16.8 | 18.9 | 30 % |
| | | 21.1 | 18.3 | 0 % |
| | | 21.7 | 19.0 | |
| 30 % | 21.4 | 20.0 | 19.6 | 10 % |
| | | 22.7 | 21.1 | 30 % |

Aus den Werten in der Tabelle ist ersichtlich, daß bei der einstufigen Härtung (1. Spalte) die unterschiedlichen Sauerstoffgehalte nur einen sehr geringen Einfluß auf die Schmiermittel- Aufnahme haben.

In dem zweistufigen Härteprozeß können die aufgenommenen Schmiermittelmengen (in mg) in einem Bereich von etwa 16 bis etwa 38 in Abhängigkeit von dem Härtungszyklus variieren. Eine sehr hohe Schmiermittelaufnahme wird festgestellt, wenn die Magnetschicht zunächst in einer Stickstoffatmosphäre gehärtet wurde, gefolgt von einer Nachhärtung in einer Atmosphäre mit hohem Sauerstoffgehalt über eine längere Zeit hinweg (Spalte 3, 3. Wert). Bei Anwendung dieses Härtungszyklus kann die aufgenommene Schmiermittelmenge verdoppelt werden, verglichen mit der Menge aus dem einstufigen Härtungsprozeß. Dieser Effekt der zweistufigen Härtung kann auch bei einer einstufigen Härtung erreicht werden, wenn in der Anfangsphase in Stickstoff und in der Endphase in einer Atmosphäre mit hohem Sauerstoffgehalt gehärtet wird und während des Wechsels der Atmosphäre nicht herabgekühlt wird.

Eine Erklärung für die drastische Erhöhung des Schmiermittelaufnahmevermögens kann etwa folgendermaßen aussehen: Die Schmiermittelaufnahme hängt von der Menge und dem Grad des Abbaus des zugegebenen PVME ab. Während der bisher durchgeführten Härtung in Luft setzen der Abbau von PVME und die Härtung der Polymermatrix mit dem Aufheizen des Ofens etwa gleichzeitig ein. Die Porenbildung in dem Überzug ist zurückzuführen auf die Phasentrennung des PVME, welche durch die Unverträglichkeit der polymerisierenden Harzmoleküle des Bindemittels mit PVME zustande kommt. Je mehr PVME der Phasentrennung unterliegt, desto mehr Poren können gebildet werden und desto größer ist die Schmiermittelaufnahme.

Während der normalen Härtung (in Luft) setzt der Abbau des PVME bereits ein, ehe die Harzmoleküle ein hohes Molekulargewicht erreichen, d. h. eine große Menge des PVME ist bereits abgebaut, ehe die Phasentrennung des PVME vollständig und die Harzmatrix hinreichend vernetzt ist, um die Stabilität der Poren zu gewährleisten.

Während der Härtung in Stickstoff (1. Spalte, 1. Wert) erreichen die Harzmoleküle ein hohes Molekulargewicht ohne daß gleichzeitig PVME-Moleküle abgebaut werden und eine vollständige Phasentrennung zwischen PVME und der hochmolekularen Harzmatrix stattfindet. Es wurde festgestellt, daß erst dann, wenn die Phasentrennung des PVME während des Härtens in Stickstoff abgeschlossen ist, eine Härtung in einer Atmosphäre mit einem Gehalt an Sauerstoff für eine solche Zeitdauer durchgeführt werden kann (3. Spalte, 3. Wert), bis alles PVME abgebaut ist, wodurch der höchst mögliche Grad an Porosität in der Magnetschicht und damit das höchst mögliche Potential für die Schmiermittelaufnahme erreicht wird.

Bei Anwendung dieses zweistufigen Härtungszyklus kann mit der gleichen Menge an PVME die Schmiermittelaufnahme praktisch verdoppelt werden, oder die Menge an PVME die beispielsweise für eine Schmiermittelaufnahme von 20 mg durch eine Magnetplatte bestimmter Größe erforderlich ist, kann wesentlich reduziert werden. Diese geringere Menge an PVME wirkt sich in positiver Weise auf die mechanischen Eigenschaften der Magnetschicht und auf die Glasübergangstemperatur aus, weil das PVME nicht nur als Porenbildner wirkt sondern auch in die Vernetzungsreaktion der Harzmoleküle eingreift.

Es wurden mehrere thermoanalytische Methoden entwickelt, mit denen der Grad der chemischen Vernetzung charakterisiert werden kann. Bei der Dynamisch Mechanischen Analyse (DMA) beispielsweise wird das erste Verlustmaximum der Dämpfung ausgewertet, das als Äquivalent zur Glasübergangstemperatur (Tg) des Harzes angesehen werden kann. So ergibt dieses Verlustmaximum, gegen die Temperatur aufgetragen, daß nach einer etwa 2.5 stündigen Härtung stabile DMA-Werte für die Magnetschichten der zuvor angegebenen Tabelle erreicht sind, d. h. daß die Harzmatrix der Magnetschicht vollkommen vernetzt ist. Bei einer Nachhärtung für 20 Minuten in einer Atmosphäre mit verschiedenen Sauerstoffgehalten ändern sich diese Werte kaum. Erst bei einer längeren Dauer der Nachhärtung (60 Minuten) und bei hohen Sauerstoffgehalten (30 %) nehmen die Werte für das Verlustmaximum der Dämpfung wieder stark zu. Dies wird so gedeutet, daß durch die Oxidation der Magnetschicht ein weiterer Grad der Vernetzung möglich ist.

Die Erfindung wurde anhand von Beschichtungszusammensetzungen mit einem Gehalt an PVME erläutert. Selbstverständlich können auch andere Zusätze, beispielsweise die in der U. S. Patentschrift 4,546,035 beschriebenen und andere eingesetzt werden, wenn es sich bei diesen um oxidierbare Materialien handelt, die in der Matrix des polymeren Bindemittels unlöslich und unter den o.g. Prozeßparametern thermisch stabil sind.

## Ansprüche

1. Verfahren zur Erhöhung der Schmiermittelaufnahme durch eine Magnetschicht eines magnetischen Aufzeichnungsträgers, bei dem eine Beschichtungsmasse aus magnetischen Teilchen, dispergiert in einem härtbaren organischen Bindemittelsystem und Lösungsmitteln oder Mischungen derselben und einem Zusatz auf ein Substrat aufgetragen und gehärtet wird,
dadurch gekennzeichnet,
daß die Härtung der Magnetschicht stufenweise durchgeführt wird, indem sie in einer ersten Stufe in einem Inertgas für eine bestimmte Zeit auf eine bestimmte Temperatur erhitzt wird und in einer zweiten Stufe in demselben Inertgas, aber mit einem Zusatz an Sauerstoff, für eine bestimmte Zeit auf eine bestimmte Temperatur erhitzt wird.

2. Verfahren nach Anspruch 1,
dadurch gekennzeichnet,
daß man die Magnetschicht zwischen der ersten und der zweiten Stufe der Härtung abkühlen läßt.

3. Verfahren nach den Ansprüchen 1 und 2,
dadurch gekennzeichnet,
daß die stufenweise Härtung in der Weise durchgeführt wird, daß in einer Anfangsphase in einem Inertgas gehärtet wird und anschließend, ohne Abkühlung, ein Wechsel der Atmosphäre vorgenommen und in einer Endphase in demselben Inertgas, aber mit einem Zusatz an Sauerstoff, gehärtet wird.

4. Verfahren nach Anspruch 1,
dadurch gekennzeichnet,
daß die erste Stufe der Härtung in einem Inertgas aus der Gruppe von Stickstoff, Edelgasen und $CO_2$ vorgenommen wird.

5. Verfahren nach Anspruch 1,
dadurch gekennzeichnet,
daß die zweite Stufe der Härtung in einem Inertgas aus der Gruppe von Stickstoff, Edelgasen und $CO_2$ vorgenommen wird, dem unterschiedliche Mengen Sauerstoff beigefügt sind.

6. Verfahren nach den Ansprüchen 1 und 5,
dadurch gekennzeichnet,
daß die zweite Stufe der Härtung in Inertgas mit einem Zusatz von 0 bis etwa 30 Vol % Sauerstoff durchgeführt wird.

7. Verfahren nach Anspruch 1,
dadurch gekennzeichnet,
daß die erste Stufe der Härtung für eine Zeitdauer von etwa 1.5 bis 3 Stunden vorgenommen wird.

8. Verfahren nach Anspruch 1,
dadurch gekennzeichnet,
daß die zweite Stufe der Härtung für eine Zeitdauer von etwa 60 bis 120 Minuten vorgenommen wird.

9. Verfahren nach Anspruch 1,
dadurch gekennzeichnet,
daß die erste und die zweite Stufe der Härtung bei einer Temperatur von etwa 210 ° C bis 245 ° C durchgeführt werden.

10. Verfahren nach einem oder mehreren der Ansprüche 1 bis 9,
dadurch gekennzeichnet,
daß die erste Stufe der Härtung in Stickstoff für eine Zeit von etwa 2.5 Stunden bei einer Temperatur von etwa 234 ° C und die zweite Stufe der Härtung in Stickstoff mit einem Zusatz von etwa 30 Vol% Sauerstoff für eine Zeit von etwa 60 Minuten bei einer Temperatur von etwa 234 ° C durchgeführt wird.

11. Verfahren nach Anspruch 1,
dadurch gekennzeichnet,
daß der Beschichtungsmasse eine oxidierbare Substanz, welche in der Matrix des polymeren Bindemittels unlöslich und unter den angewendeten Prozeßparametern thermisch stabil ist, zugesetzt wird.

12. Verfahren nach Anspruch 11,
dadurch gekennzeichnet,
daß der Beschichtungsmasse Polyvinylmethylether (PVME) zugesetzt wird.

13. Verfahren nach den Ansprüchen 1, 11 und 12,
dadurch gekennzeichnet,
daß während der ersten Stufe der Härtung eine Polymerisation der Harzbestandteile des Bindemittels und eine Phasentrennung des Zusatzes erfolgt und während der zweiten Stufe der Härtung in sauerstoffhaltiger Atmosphäre eine Oxidation des Zusatzes erfolgt unter Ausbildung einer großen Anzahl von Poren in der Magnetschicht.

14. Verfahren nach einem oder mehreren der Ansprüche 1 bis 13,
dadurch gekennzeichnet,
daß auf die gehärtete Magnetschicht ein einen Fluorkohlenstoff enthaltendes Schmiermittel aufgetragen wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | IBM TECHNICAL DISCLOSURE BULLETIN Band 26, Nr. 9, Februar 1984, Seite 4455, M.R. LORENZ et al.:"Controlled pore formation in magnetic disk coatings to optimize lubricant retention" * ganzes Dokument * `---` | 1 | G 11 B 5/84 G 11 B 5/712 |
| A | PATENT ABSTRACTS OF JAPAN Band 8, Nr. 51 (P-259)(1488), 8. März 1984; & JP - A - 58 200 431 (FUJITSU) 22.11.1983 `---` | 1 | |
| A | PATENT ABSTRACTS OF JAPAN Band 10, Nr. 152 (P-462)(2208), 3. Juni 1986; & JP - A - 615437 (TOKICO) 11.01.1986 `---` | 1 | |
| A | EP-A-0 172 520 (BASF) * ganzes Dokument * `---` | 1 | |
| D,A | US-A-4 546 035 (MING KO et al.) * Anspruch 1 * `-----` | 1 | **RECHERCHIERTE SACHGEBIETE (Int. Cl.4)** G 11 B 5/00 |

Der vorliegende Recherchenbericht wurde für alle Patentansprüche erstellt

| Recherchenort | Abschlußdatum der Recherche | Prüfer |
|---|---|---|
| BERLIN | 14-04-1989 | CHAUMERON B. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)